# EUROPÄISCHE PATENTSCHRIFT

(11) **EP 3 131 709 B1**
(45) Veröffentlichungstag und Bekanntmachung des Hinweises auf die Patenterteilung: **22.09.2021**
(21) Anmeldenummer: 15715255.4
(22) Anmeldetag: 09.04.2015
(51) Int. Cl.: B25F 5/00

(54) **VERFAHREN ZUM BETREIBEN EINER HANDWERKZEUGMASCHINE, HANDWERKZEUGMASCHINE**
METHOD FOR OPERATING A HAND-HELD POWER TOOL, HAND-HELD POWER TOOL
PROCÉDÉ POUR FAIRE FONCTIONNER UNE MACHINE-OUTIL À MAIN ET MACHINE-OUTIL À MAIN

(30) Priorität: 17.04.2014 DE 102014207434
(43) Veröffentlichungstag der Anmeldung: 22.02.2017
(73) Patentinhaber: Robert Bosch GmbH, 70442 Stuttgart (DE)
(72) Erfinder: WIRNITZER, Bernd, 71292 Friolzheim (DE); STEURER, Christoph, 73660 Urbach (DE)
(86) Internationale Anmeldenummer: PCT/EP2015/057711
(87) Internationale Veröffentlichungsnummer: WO 2015/158598

(56) Entgegenhaltungen:
- DE-A1- 4 334 933
- DE-A1-102012 208 180
- None

## Beschreibung

Die Erfindung betrifft ein Verfahren zum Betreiben einer Handwerkzeugmaschine gemäß dem Oberbegriff des Patentanspruchs 1, sowie eine entsprechende Handwerkzeugmaschine. Ein derartiges Verfahren geht beispielsweise aus der DE 103 03 005 A1 hervor.

### Stand der Technik

Üblicherweise werden Handwerkzeugmaschinen dadurch betrieben, dass der Benutzer eine Wunschleistung, beispielsweise durch Betätigen einer Schalteinrichtung, vorgibt, die von einer Antriebseinrichtung umgesetzt und zum Antreiben eines Werkzeugs genutzt wird. Dadurch kann der Benutzer beispielsweise die Rotationsgeschwindigkeit beziehungsweise die Drehzahl eines Bohrers oder eines Schraubendrehers oder auch die Arbeitsgeschwindigkeit eines Sägeblatts oder dergleichen bestimmen. Häufig ist dabei eine Steuereinrichtung vorgesehen, die insbesondere die Antriebseinrichtung auf ihre Funktionsfähigkeit überwacht, um bei Bedarf den Betrieb der Handwerkzeugmaschine einzustellen oder beispielsweise dem Benutzer durch ein akustisches Signal eine Fehlermeldung anzuzeigen. Für die Überwachung ist jedoch häufig eine aufwändige Elektronik notwendig, die beispielsweise die Betriebsströme einer elektrischen Antriebseinrichtung überwacht und auswertet.

### Offenbarung der Erfindung

Das erfindungsgemäße Verfahren zum Betreiben einer Handwerkzeugmaschine wird in Patentanspruch 1 definiert. Das Verfahren hat den Vorteil, dass auf eine aufwändige Elektronik verzichtet werden kann, und dass mit einfachen Hilfsmitteln auf einen Defekt beziehungsweise eine Fehlfunktion der Handwerkzeugmaschine geschlossen werden kann. Hierzu ist vorgesehen, dass die Handwerkzeugmaschine durch einen Beschleunigungssensor auf Vibrationen überwacht wird. Werden Vibrationen erfasst, so werden diese mit zuvor hinterlegten Referenzvibrationen verglichen und auf einen Defekt der Handwerkzeugmaschine erkannt, wenn die erfassten Vibrationen über ein vorgebbares Maß hinaus von den Referenzvibrationen abweichen. Tritt eine Fehlfunktion bei der Handwerkzeugmaschine auf, so wird sich diese in der Regel im Betrieb beziehungsweise beim Bearbeiten eines Werkstücks auch auf das Vibrationsverhalten der Handwerkzeugmaschine übertragen. Arbeitet beispielsweise eine elektrische Ansteuerung der Antriebseinrichtung nicht korrekt, so kann dies zu Vibrationen an der Handwerkzeugmaschine führen. Durch das Vorsehen des Beschleunigungssensors werden diese Vibrationen dann erfasst und dazu genutzt, einen Defekt der Handwerkzeugmaschine zu erkennen. Dabei ist es zunächst nicht wichtig, dass der genaue Defekt der Handwerkzeugmaschine ermittelbar ist. Zunächst reicht eine Abschätzung dahingehend aus, ob ein Defekt vorliegt oder nicht. Dazu werden die erfassten Vibrationen mit den Referenzvibrationen verglichen. Weichen die erfassten Vibrationen zu weit von den Referenzvibrationen ab, so wird auf den Defekt erkannt und der Betrieb der Handwerkzeugmaschine, wie zuvor beschrieben, beeinflusst. Dadurch kann auf eine aufwändige Überwachungseinrichtung der Handwerkzeugmaschine verzichtet werden. Die Referenzvibrationen werden beispielsweise zuvor durch Versuche ermittelt.

Gemäß einer bevorzugten Weiterbildung der Erfindung ist vorgesehen, das bei Erfassen eines Defekts eine Leistung, insbesondere die Maximalleistung der Handwerkzeugmaschine, oder mindestens ein die Leistung beeinflussender Parameter verringert werden. Unter einem die Leistung beeinflussenden Parameter werden vorliegend insbesondere eine Versorgungsspannung oder ein Versorgungsstrom verstanden. Hierbei ist also vorgesehen, dass der Betrieb der Handwerkzeugmaschine derart beeinflusst wird, dass die Leistung der Handwerkzeugmaschine verringert wird, so dass dem Benutzer nicht mehr die theoretisch vorhandene Leistung zur Verfügung gestellt wird. Insbesondere wird die maximale Leistung der Handwerkzeugmaschine verringert, so dass der Benutzer die Handwerkzeugmaschine benutzen, jedoch nicht ihre volle Leistung ausnutzen kann. Dadurch wird beispielsweise erreicht, dass eine Überlastung der Handwerkzeugmaschine, die aufgrund des Defekts zu weiteren Beschädigungen führen könnte, vermieden wird. Auch wird die Sicherheit der Nutzung des Werkzeugs für den Benutzer dadurch erhöht.

Gemäß einer vorteilhaften Weiterbildung der Erfindung ist vorgesehen, dass das Verringern der Leistung oder des Parameters in Abhängigkeit von einem aktuellen Betriebszustand der Handwerkzeugmaschine durchgeführt wird. So ist insbesondere vorgesehen, dass die Leistung oder der Parameter nur dann verringert oder beeinflusst wird, wenn sich die Drehzahl des Werkzeugs oder der Antriebseinrichtung verringert, beispielsweise weil der Benutzer eine entsprechend niedrigere Leistung anfordert. Alternativ oder zusätzlich ist vorgesehen, dass in Abhängigkeit von einem gewählten Gang bei einer Handwerkzeugmaschine, die entsprechend ein mehrgängiges Getriebe aufweist, die Leistung verringert wird. Fordert der Benutzer jedoch unverändert eine (hohe) Drehzahl an wenn der Defekt auftritt, so wird die Leistung der Handwerkzeugmaschine nicht beeinflusst, damit der angefangene Bearbeitungsvorgang sicher zu Ende geführt werden kann, ohne dass der Benutzer durch einen plötzlichen Leistungsverlust irritiert wird.

Ferner ist bevorzugt vorgesehen, dass bei Erfassen eines Defekts ein auslaufendes Werkzeug der Handwerkzeugmaschine gebremst wird. Dies ist bevorzugt auch dann vorgesehen, wenn der Defekt auf herkömmliche Art und Weise erfasst wurde. Beendet der Benutzer beispielsweise die Betätigung der Schaltereinrichtung zur Vorgabe einer Soll-Leistung der Handwerkzeugmaschine, so ist bei vielen Handwerkzeugmaschinen vorgesehen, dass das durch die Antriebseinrichtung angetriebene Werkzeug ausläuft, bis es aufgrund von Reibung von selbst zum Stillstand kommt. Vorliegend ist bevorzugt jedoch vorgesehen, dass wenn ein Defekt erfasst wurde, das auslaufende Werkzeug aktiv gebremst wird, um die Handwerkzeugmaschine möglichst schnell in einen sicheren Zustand zu überführen. Dazu ist dem Werkzeug und/oder der Antriebseinrichtung zweckmäßigerweise eine entsprechende Bremseinrichtung zugeordnet, die bei Erfassen eines Defekts durch die Steuereinrichtung zum Bremsen des Werkzeugs angesteuert werden kann.

Weiterhin ist gemäß einer Weiterbildung oder einer alternativen Ausführungsform bevorzugt vorgesehen, dass der Betrieb der Handwerkzeugmaschine nur dann zugelassen wird, wenn durch den Beschleunigungssensor keine oder im Wesentlichen keine Beschleunigungen erfasst werden. Hierdurch wird erreicht, dass vor der Durchführung eines Bearbeitungsvorgangs geprüft wird, ob die Handwerkzeugmaschine von dem Benutzer ruhig gehalten wird. Nur dann, wenn festgestellt wurde, dass keine Beschleunigungen oder nur geringe Beschleunigungen auftreten, wird davon ausgegangen, dass der Benutzer die Handwerkzeugmaschine ausreichend ruhig hält, um einen Bearbeitungsvorgang sicher durchführen zu können.

Gemäß einer besonders bevorzugten Weiterbildung der Erfindung ist weiterhin vorgesehen, dass bei einem erkannten Defekt die erfassten Vibrationen gespeichert und bei einer Wiederinbetriebnahme der Handwerkzeugmaschine mit aktuell erfassten Vibrationen verglichen werden, wobei in Abhängigkeit des Vergleichs der Betrieb der Handwerkzeugmaschine beeinflusst wird. Vorteilhafterweise wird bei einer Wiederinbetriebnahme der Handwerkzeugmaschine stets von Neuem die Handwerkzeugmaschine auf das Vorliegen eines Defekts auf die oben beschriebene Art und Weise überprüft. Wurde ein Defekt erkannt, und das Betriebsverhalten der Handwerkzeugmaschine entsprechend beeinflusst, wo wird bei einer erneuten Wiederinbetriebnahme die Handwerkzeugmaschine gegebenenfalls erneut in ihrem Betriebsverhalten beeinflusst. Gemäß einem alternativen Verfahren wird der Defekt unabhängig davon, wie er erfasst wurde, gespeichert und bei einer Wiederinbetriebnahme wie oben beschrieben berücksichtigt.

Durch den Vergleich der gespeicherten Vibrationen mit den aktuell erfassten Vibrationen kann schnell erkannt werden, ob der zuvor erkannte Defekt der Handwerkzeugmaschine weiterhin besteht. Entsprechend kann schnell das Betriebsverhalten der Handwerkzeugmaschine erneut beeinflusst werden.

Vorzugsweise wird die Leistung der Handwerkzeugmaschine bei Wiederinbetriebnahme und bereits gespeicherten Vibrationen oder gespeichertem Defekt verringert, so dass die Handwerkzeugmaschine von vornherein mit einer verringerten Leistung arbeitet, wenn bei dem zuletzt durchgeführten Bearbeitungsvorgang ein Defekt erkannt wurde. Dadurch wird die Betriebssicherheit erhöht.

Vorzugsweise wird, wenn bei einer Wiederinbetriebnahme der Handwerkzeugmaschine der Defekt nicht erneut erfasst wird, die Verringerung der Leistung aufgehoben und insbesondere werden die zuvor gespeicherten Vibrationen beziehungsweise Daten gelöscht.

Gemäß einer vorteilhaften Weiterbildung oder alternativen Ausführungsform der Erfindung ist außerdem vorgesehen, dass ein Drehzahlsensor der Handwerkzeugmaschine auf seine Funktionsfähigkeit überwacht wird, und dass bei Erfassen einer Fehlfunktion des Drehzahlsensors von einer Antriebsregelung zu einer Antriebssteuerung gewechselt wird. Zum Teil sind elektrische Antriebseinrichtungen von Handwerkzeugmaschinen drehzahlgeregelt ausgebildet. Wird erfasst, dass ein Drehzahlsensor nicht mehr ordnungsgemäß funktioniert, so wird die Drehzahlregelung auch nicht mehr ordnungsgemäß durchgeführt. Entsprechend wird bei Erfassen eines Defekts des Drehzahlsensors von der Regelung zu einer Antriebssteuerung gewechselt, um einen Weiterbetrieb der Handwerkzeugmaschine, wenn auch eingeschränkt, zu ermöglichen.

Die erfindungsgemäße Handwerkzeugmaschine mit den Merkmalen des Anspruchs 10 zeichnet sich durch eine speziell hergerichtete Steuereinrichtung zur Durchführung des erfindungsgemäßen Verfahrens aus. Es ergeben sich hierbei die bereits genannten Vorteile.

Im Folgenden soll die Erfindung anhand der Zeichnung näher erläutert werden. Dazu zeigen:
- Figur 1: eine Handwerkzeugmaschine in einer vereinfachten Darstellung und
- Figur 2: ein Ausführungsbeispiel eines vorteilhaften Verfahrens zum Betreiben der Handwerkzeugmaschine.

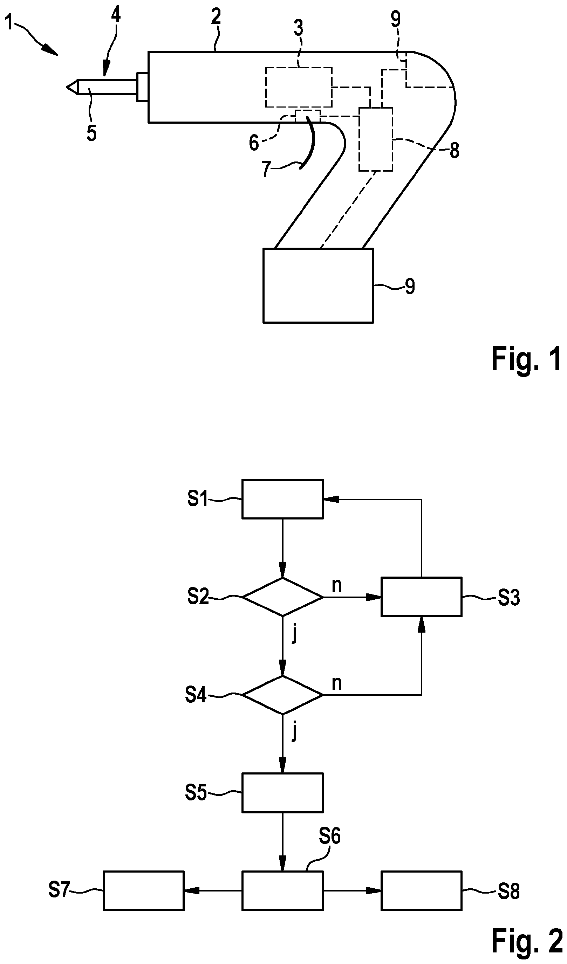

Figur 1 zeigt in einer vereinfachten Darstellung eine Handwerkzeugmaschine 1, die vorliegend als Bohrmaschine ausgebildet ist. Dazu weist die Handwerkzeugmaschine 1 ein pistolenförmiges Gehäuse 2 auf, in welchem eine Antriebseinrichtung 3 angeordnet ist. Die Antriebseinrichtung 3 ist als Elektromotor ausgebildet, der mit einem Werkzeug 4, das vorliegend als Bohrspitze 5 ausgebildet ist, zu dessen Antrieb wirkverbunden ist. Weiterhin weist die Handwerkzeugmaschine 1 eine Schaltereinrichtung 6 auf, die einen verlagerbaren, insbesondere verschiebbaren oder verschwenkbaren Schalthebel 7 aufweist. Die Schaltereinrichtung 6 erfasst die Stellung des Schalthebels 7 und leitet diese an eine Steuereinrichtung 8 weiter. Die Steuereinrichtung 8 ist mit der Schaltereinrichtung 6, mit einem insbesondere austauschbaren Energiespeicher 9 sowie mit der Antriebseinrichtung 3 verbunden, um in Abhängigkeit der Stellung des Schalthebels 7 die Antriebseinrichtung 3 anzusteuern. Ein Benutzer kann somit durch das Betätigen des Schalthebels 7 eine Wunschleistung, insbesondere Wunschdrehzahl und/oder Wunschdrehmoment, vorgeben, die durch die Antriebseinrichtung 3 erbracht werden soll. Dabei kann die Wunschleistung beispielsweise in der Art eines Drehmoments und/oder einer Drehzahl vorgegeben werden.

Die Steuereinrichtung 8 ist weiterhin mit einem Beschleunigungssensor 9 verbunden, der ebenfalls in dem Gehäuse 2 der Handwerkzeugmaschine 1 angeordnet ist. Der Beschleunigungssensor 9 erfasst die kontinuierliche Beschleunigung der Handwerkzeugmaschine 1 und sendet die erfassten Messwerte an die Steuereinheit 8, welche diese auswertet.

Dabei geht die Steuereinheit 8 in Bezug auf die Figur 2 wie im Folgenden beschrieben vor.

In einem ersten Schritt S1 erfasst die Steuereinheit 8, dass der Schalterhebel 7 betätigt wird. Infolge dessen steuert die Steuereinheit 8 die Antriebseinrichtung 3 zur Erbringung der von dem Benutzer gewünschten Leistung an. In einem Schritt S2 wertet die Steuereinheit 8 die von dem Beschleunigungssensor 9 gelieferten Messwerte aus, um zu prüfen, ob Beschleunigungen auf die Handwerkzeugmaschine 1 wirken. Wirken keine oder keine kritischen Beschleunigungen auf die Handwerkzeugmaschine 1, so wird in einem folgenden Schritt S3 die Handwerkzeugmaschine 1 wie vom Benutzer gewünscht betrieben. Gegebenenfalls kann vorgesehen sein, dass der Betrieb der Handwerkzeugmaschine 1 bereits dann freigegeben wurde, wenn im Schritt S2 erfasst wird, dass keine oder keine kritischen Beschleunigungen auf die Handwerkzeugmaschine 1 wirken (n), so dass davon ausgegangen werden kann, dass der Benutzer die Handwerkzeugmaschine 1 ausreichend ruhig hält, um einen Bearbeitungsvorgang sicher und präzise durchführen zu können.

Wird in dem Schritt S2 jedoch erfasst, dass Beschleunigungen auf die Handwerkzeugmaschine 1 wirken (j), so wird in einem anschließenden Schritt S4 ein Vergleich durchgeführt, bei welchem die durch den Beschleunigungssensor 9 erfassten Vibrationen mit zuvor in einem nichtflüchtigen Speicher hinterlegten Referenzvibrationen verglichen werden. Dabei sind die Referenzvibrationen insbesondere in Abhängigkeit von der Stellung des Schalthebels 7 beziehungsweise in Abhängigkeit von der gewünschten Leistung der Handwerkzeugmaschine 1 und/oder von einer Drehzahl und/oder der Art eines zu bearbeitenden Werkstücks vorgegeben, so dass eine Referenzvibrationskennlinie oder ein Referenzvibrationskennfeld zum Vergleich mit den aktuell erfassten Vibrationen zur Verfügung steht. Die Referenzvibrationen wurden zuvor in Versuchen ermittelt und gegebenenfalls gemittelt gespeichert. Wird bei dem Vergleich in Schritt S4 erfasst, dass die erfassten Vibrationen zumindest im Wesentlichen den Referenzvibrationen entsprechen, so wird darauf erkannt, dass sich die Handwerkzeugmaschine 1 erwartungsgemäß und damit normal verhält (n), so dass mit Schritt S3 weiterverfahren wird. Wird jedoch erfasst (j), dass die Vibrationen über ein vorgebbares Maß von den Referenzvibrationen abweichen, so wird in Schritt S5 darauf erkannt, dass ein Defekt der Handwerkzeugmaschine 1 vorliegen muss. Dabei kann der Defekt sowohl durch ein kaputtes Werkzeug 4 oder eine nicht ordnungsgemäß arbeitende Antriebseinrichtung 3 oder dergleichen begründet sein. Die genaue Ursache des Defekts ist dabei zunächst nicht von Bedeutung. Wurde ein Defekt erkannt, so wird in einem darauffolgenden Schritt S6 das Betriebsverhalten der Handwerkzeugmaschine 1 beeinflusst. Dazu stehen unterschiedliche Möglichkeiten zur Verfügung, die sich beispielsweise auch in Abhängigkeit von dem aktuellen Betriebszustand der Handwerkzeugmaschine 1 ergeben.

Als eine Möglichkeit ist vorgesehen, dass in einem Schritt S7 die Leistung der Handwerkzeugmaschine 1 verringert wird. Dabei ist insbesondere vorgesehen, dass die maximal erreichbare Leistung der Handwerkzeugmaschine 1 verringert wird, so dass einem Benutzer, der die Schaltereinrichtung 6 betätigt, die volle Leistung der elektrischen Handwerkzeugmaschine nicht mehr zur Verfügung steht. Insbesondere werden die maximale Drehzahl und/oder das maximale Drehmoment der Antriebseinrichtung 3 verringert. Dadurch wird die Sicherheit bei der Benutzung der Handwerkzeugmaschine 1 bei Vorliegen eines Defekts erhöht. Das Verringern der Leistung wird dabei bevorzugt in Abhängigkeit von bestimmten Betriebszuständen der Handwerkzeugmaschine 1 durchgeführt. So ist insbesondere vorgesehen, dass die Leistung der Handwerkzeugmaschine 1 nur dann verringert wird, wenn sich die Drehzahl des Werkzeugs 4 verringert, wenn also der Benutzer selbst ein Verringern der Leistung der Handwerkzeugmaschine 1 vorgibt. Dadurch wird vermieden, dass im Betrieb die vom Benutzer geforderte Leistung plötzlich wegfällt und den Benutzer überrascht. Auch ist es denkbar, in Abhängigkeit von einem gewählten Gang eines mehrgängigen, der elektrischen Antriebseinrichtung 3 gegebenenfalls zugeordneten Getriebes die Leistung zu verringern, so dass beispielsweise bei unterschiedlichen Übersetzungen des mehrgängigen Getriebes unterschiedliche Leistungsverringerungen vorgesehen werden. Im Extremfall, beispielsweise wenn die erfassten Vibrationen die Referenzvibrationen um einen vorgebbaren Grenzwert überschreiten, wird die Handwerkzeugmaschine 1 stillgelegt, die Leistung also auf 0 verringert und vorzugsweise ein weiterer Betrieb der Handwerkzeugmaschine 1 verhindert beziehungsweise nicht zugelassen.

Wird als Betriebszustand der Handwerkzeugmaschine 1 erfasst, dass der Benutzer das Werkzeug 4 durch Loslassen des Schalthebels 7 auslaufen lässt, so wird das Werkzeug 4 vorzugsweise aktiv abgebremst, wenn ein Defekt auf die oben beschriebene oder zusätzlich oder alternativ auf eine andere Art und Weise erfasst wurde. Dadurch wird ein Auslaufen des Werkzeugs 4 verhindert und ein schnelles Abbremsen des Werkzeugs 4 erreicht, so dass die Sicherheit der Handwerkzeugmaschine 1 bei Auftreten eines Defekts weiter erhöht wird. Alternativ oder zusätzlich kann dem Benutzer dabei der Defekt akustisch oder visuell angezeigt werden.

Alternativ oder zusätzlich wird in einem Schritt S8 der erfasste beziehungsweise erkannte Defekt gespeichert. Dazu wird die zuvor erzeugte Fehlermeldung in einem flüchtigen oder nicht flüchtigen Speicher hinterlegt. Insbesondere werden die zuvor erfassten Vibrationen, die von den Referenzvibrationen über das vorgebbare Maß hinaus abweichen, in dem Speicher hinterlegt, so dass bei einer Wiederinbetriebnahme der Handwerkzeugmaschine 1, also bei einem darauffolgenden Neustart, der Fehler bereits bekannt ist. Wird die Handwerkzeugmaschine 1 dann erneut gestartet, werden die durch den Beschleunigungssensor 9 erfassten Vibrationen mit den gespeicherten Vibrationen verglichen und bei erneutem Auftreten desselben Defekts, die in Schritt S7 beschriebenen Vorkehrungen durchgeführt. Durch einen Vergleich der aktuell erfassten Vibrationen mit den gespeicherten Vibrationen lässt sich schnell darauf schließen, ob es sich um den gleichen Defekt handelt.

Wird bei der Wiederinbetriebnahme jedoch erfasst, dass die aktuell erfassten Vibrationen sich von den hinterlegten beziehungsweise Vibrationen unterscheiden, so wird die vorherige Fehlermeldung beziehungsweise werden die gespeicherten Vibrationen aus dem Speicher wieder gelöscht. Erst wenn die aktuell erfassten Vibrationen wieder die Referenzvibrationen über das vorgebbare Maß hinaus überschreiten, wird ein Fehler erkannt und in dem Speicher hinterlegt.

Alternativ ist vorgesehen, dass die Leistung der Handwerkzeugmaschine 1 direkt bei der Wiederinbetriebnahme bereits beschränkt wird. Erst wenn erfasst wird, dass die aktuell erfassten Vibrationen den Referenzvibrationen zumindest im Wesentlichen entsprechen, wird die Beschränkung beziehungsweise die Verringerung der Leistung wieder aufgehoben, da dann davon ausgegangen wird, dass der Defekt nicht mehr vorliegt.

Ist gemäß einem weiteren, hier nicht dargestellten Ausführungsbeispiel vorgesehen, dass der Antriebseinrichtung 3 ein Drehzahlsensor zugeordnet ist, so wird dieser durch die Steuereinheit 8 bevorzugt ebenfalls kontinuierlich auf Funktionalität überprüft. Wird dabei erfasst, dass der Drehzahlsensor defekt ist, so wird die Drehzahlregelung der Antriebseinrichtung 3 in eine Drehzahlsteuerung gewechselt, um einen Weiterbetrieb der Handwerkzeugmaschine 1 zumindest in einem Notbetrieb zu ermöglichen.

Ist die Handwerkzeugmaschine 1 als Bohrhammer ausgebildet, so kann der Beschleunigungssensor 9 auch dazu genutzt werden, die Drehzahl des Bohrhammers anhand der durch den Beschleunigungssensor erfassten Schläge zu ermitteln. Insofern könnte der Beschleunigungssensor 9 zur indirekten Drehzahlerfassung genutzt werden. Bei einem Defekt des Beschleunigungssensors 9 wird dann entsprechend, wie zuvor beschrieben, vorgegangen und die Drehzahlregelung in eine Drehzahlsteuerung gewechselt. Insbesondere wird dem Benutzer außerdem der Defekt visuell oder akustisch angezeigt.

Ist die Handwerkzeugmaschine 1 als Nietmaschine ausgebildet, so erfasst der Beschleunigungssensor insbesondere, ob innerhalb eines vorgebbaren Zeitfensters keine oder nur geringe Bewegungen erfolgen, wie bereits zu Schritt S2 beschrieben. Erst wenn bestätigt wird, dass die Handwerkzeugmaschine 1 ruhig gehalten wird, wird ein Niet- oder Nagelvorgang zugelassen. Hierdurch wird die Arbeitssicherheit erhöht. Insbesondere erfolgt die Freigabe des Betriebs in Zusammenarbeit mit einem Anpresssensor, der das Aufsetzen der Handwerkzeugmaschine 1, insbesondere der Niet-Nagelmaschine auf ein Werkstück erfasst, so dass erst bei auf das Werkstück aufgesetzter Handwerkzeugmaschine 1 und ausreichend geringen Beschleunigungen ein Bearbeitungsvorgang erlaubt wird.

## Patentansprüche

1. Verfahren zum Betreiben einer Handwerkzeugmaschine (1), die wenigstens einen Beschleunigungssensor (9) aufweist, wobei die Handwerkzeugmaschine (1) auf Defekte überwacht wird, mit folgendem Schritt:
- Erfassen von Vibrationen der Handwerkzeugmaschine durch den Beschleunigungssensor (9),
**dadurch gekennzeichnet, dass** das Verfahren die folgenden Schritte aufweist:
- Vergleichen der erfassten Vibrationen mit zuvor hinterlegten Referenzvibrationen, wobei die hinterlegten Referenzvibrationen abhängig sind von einer Wunschleistung, insbesondere einer Wunschdrehzahl und/oder einem Wunschdrehmoment, der Handwerkzeugmaschine (1) und eine Referenzvibrationskennlinie oder ein Referenzvibrationskennfeld zum Vergleich mit den erfassten Vibrationen zur Verfügung steht,
- Erkennen auf einen Defekt der Handwerkzeugmaschine (1), wenn die erfassten Vibrationen über ein vorgebbares Maß hinaus von den Referenzvibrationen abweichen, und
- Beeinflussen des Betriebsverhaltens der Handwerkzeugmaschine (1), wenn ein Defekt erfasst wurde.

2. Verfahren nach Anspruch 1, **dadurch gekennzeichnet, dass** bei Erfassen eines Defekts eine Leistung, insbesondere die maximale Leistung der Handwerkzeugmaschine (1), oder mindestens ein die Leistung beeinflussender Parameter verringert werden.

3. Verfahren nach einem der vorhergehenden Ansprüche, **dadurch gekennzeichnet, dass** das Verringern der Leistung oder der Parameter in Abhängigkeit von einem aktuellen Betriebszustand der Handwerkzeugmaschine (1) durchgeführt wird.

4. Verfahren nach einem der vorhergehenden Ansprüche, **dadurch gekennzeichnet, dass** bei Erfassen eines Defekts ein auslaufendes Werkzeug (4) der Handwerkzeugmaschine (1) gebremst wird.

5. Verfahren nach einem der vorhergehenden Ansprüche, **dadurch gekennzeichnet, dass** ein Betrieb der Handwerkzeugmaschine (1) nur dann zugelassen wird, wenn durch den Beschleunigungssensor (9) keine oder im Wesentlichen keine Beschleunigungen erfasst werden.

6. Verfahren nach einem der vorhergehenden Ansprüche, **dadurch gekennzeichnet, dass** bei einem erkannten Defekt die erfassten Vibrationen gespeichert und bei einer Wiederinbetriebnahme der Handwerkzeugmaschine (1) mit aktuell erfassten Vibrationen verglichen werden, wobei in Abhängigkeit des Vergleichs das Betriebsverhalten der Handwerkzeugmaschine (1) beeinflusst wird.

7. Verfahren nach einem der vorhergehenden Ansprüche, **dadurch gekennzeichnet, dass** bei einem erkannten Defekt der Defekt gespeichert und die Leistung oder der Parameter der Handwerkzeugmaschine (1) bei Wiederinbetriebnahme der Handwerkzeugmaschine mit gespeichertem Defekt verringert wird.

8. Verfahren nach einem der vorhergehenden Ansprüche, **dadurch gekennzeichnet, dass**, wenn bei Wiederinbetriebnahme der Defekt nicht mehr erfasst wird, die Verringerung der Leistung aufgehoben und insbesondere die gespeicherten Vibrationen gelöscht werden.

9. Verfahren nach einem der vorhergehenden Ansprüche, **dadurch gekennzeichnet, dass** ein Drehzahlsensor der Handwerkzeugmaschine (1) auf Funktionsfähigkeit überwacht wird, und dass bei Erfassen einer Fehlfunktion des Drehzahlsensors von einer Antriebsregelung in eine Antriebssteuerung gewechselt wird.

10. Handwerkzeugmaschine (1), mit einer insbesondere elektrischen Antriebseinrichtung (3), mit einem Beschleunigungssensor (9) und mit einem durch die Antriebseinrichtung (3) antreibbaren Werkzeug (4), **gekennzeichnet durch** eine speziell hergestellte Steuereinrichtung (8), die das Verfahren nach einem oder mehreren der vorhergehenden Ansprüche durchführt.

## Claims

1. Method for operating a hand-held power tool (1) that has at least one acceleration sensor (9), wherein the hand-held power tool (1) is monitored for defects, having the following step:
- sensing vibrations of the hand-held power tool by the acceleration sensor (9),
**characterized in that** the method has the following steps:
- comparing the sensed vibrations with previously stored reference vibrations, wherein the stored reference vibrations are dependent on a desired output, in particular a desired rotational speed and/or a desired torque, of the hand-held power tool (1) and a reference vibration characteristic curve or a reference vibration characteristic map is available for comparison with the sensed vibrations,
- identifying a defect of the hand-held power tool (1) if the sensed vibrations deviate from the reference vibrations beyond a predefinable extent, and
- influencing the operating behaviour of the hand-held power tool (1) if a defect has been sensed.

2. Method according to Claim 1, **characterized in that**, if a defect is sensed, an output, in particular the maximum output of the hand-held power tool (1), or at least a parameter that influences the output, is reduced.

3. Method according to either of the preceding claims, **characterized in that** the reduction of the output or of the parameter is carried out depending on a current operating state of the hand-held power tool (1) .

4. Method according to one of the preceding claims, **characterized in that**, if a defect is sensed, a coasting-down tool (4) of the hand-held power tool (1) is braked.

5. Method according to one of the preceding claims, **characterized in that** operation of the hand-held power tool (1) is allowed only when no accelerations, or substantially no accelerations, are sensed by the acceleration sensor (9).

6. Method according to one of the preceding claims, **characterized in that**, if a defect has been identified, the sensed vibrations are stored and are compared with currently sensed vibrations when the hand-held power tool (1) is put back into operation, wherein the operating behaviour of the hand-held power tool (1) is influenced depending on the comparison.

7. Method according to one of the preceding claims, **characterized in that**, if a defect has been identified, the defect is stored and the output or the parameter of the hand-held power tool (1) is reduced when the hand-held power tool having a stored defect is put back into operation.

8. Method according to one of the preceding claims, **characterized in that** if the defect is no longer sensed when the hand-held power tool is put back into operation, the reduction of the output is cancelled and in particular the stored vibrations are erased.

9. Method according to one of the preceding claims, **characterized in that** a rotational speed sensor of the hand-held power tool (1) is monitored in respect of functionality, and **in that**, if a malfunction of the rotational speed sensor is sensed, a changeover is effected from closed-loop drive control to open-loop drive control.

10. Hand-held power tool (1) having an in particular electric drive means (3), having an acceleration sensor (9) and having a tool (4) that is able to be driven by the drive means (3), **characterized by** a specially produced control device (8) that carries out the method according to one or more of the preceding claims.

## Revendications

1. Procédé de fonctionnement d'une machine-outil à main (1), qui comporte au moins un capteur d'accélération (9), la machine-outil à main (1) étant surveillée pour détecter des défauts, le procédé comprenant l'étape suivante :
- détecter des vibrations de la machine-outil à main par le biais du capteur d'accélération (9),
**caractérisé en ce que** le procédé comporte les étapes suivantes :
- comparer des vibrations détectées à des vibrations de référence précédemment mémorisées, les vibrations de référence mémorisées dépendant d'une puissance souhaitée, en particulier d'une vitesse de rotation souhaitée et/ou d'un couple souhaité, de machine-outil à main (1) et une caractéristique de vibration de référence ou un diagramme de vibrations de référence étant disponible en vue d'une comparaison aux vibrations mémorisées,
- détecter un défaut dans la machine-outil à main (1) lorsque les vibrations détectées s'écartent des vibrations de référence de plus d'une quantité spécifiée, et
- influer sur le comportement en fonctionnement de la machine-outil à main (1) lorsqu'un défaut a été détecté.

2. Procédé selon la revendication 1, **caractérisé en ce que**, lorsqu'un défaut est détecté, une puissance, notamment la puissance maximale de la machine-outil à main (1), ou au moins un paramètre influant sur la puissance, est réduit(e).

3. Procédé selon l'une des revendications précédentes, **caractérisé en ce que** la réduction de la puissance ou des paramètres est effectuée en fonction d'un état de fonctionnement actuel de la machine-outil à main (1).

4. Procédé selon l'une des revendications précédentes, **caractérisé en ce que**, lorsqu'un défaut est détecté, un outil usé (4) de la machine-outil à main (1) est freiné.

5. Procédé selon l'une des revendications précédentes, **caractérisé en ce que** le fonctionnement de la machine-outil à main (1) n'est autorisé que si aucune ou pratiquement aucune accélération n'est détectée par le capteur d'accélération (9).

6. Procédé selon l'une des revendications précédentes, **caractérisé en ce que**, lorsqu'un défaut est détecté, les vibrations détectées sont mémorisées et comparées aux vibrations actuellement détectées lorsque la machine-outil à main (1) est redémarrée, l'influence sur le comportement en fonctionnement de la machine-outil à main (1) dépendant de la comparaison.

7. Procédé selon l'une des revendications précédentes, **caractérisé en ce que**, lorsqu'un défaut est détecté, le défaut est mémorisé et la puissance ou le paramètre de machine-outil à main (1) est réduit (e) lorsque la machine-outil à main est redémarrée avec un défaut en mémoire.

8. Procédé selon l'une des revendications précédentes, **caractérisé en ce que**, lorsque le défaut n'est plus détecté au redémarrage, la réduction de puissance est supprimée et notamment les vibrations mémorisées sont supprimées.

9. Procédé selon l'une des revendications précédentes, **caractérisé en ce que** la fonctionnalité d'un capteur de vitesse de rotation de la machine-outil à main (1) est surveillée et **en ce que**, lorsqu'un dysfonctionnement du capteur de vitesse de rotation est détecté, une commutation est effectuée d'une régulation d'entraînement sur une commande d'entraînement.

10. Machine-outil à main (1), comprenant un dispositif d'entraînement (3) notamment électrique, un capteur d'accélération (9) et un outil (4) pouvant être entraîné par le dispositif d'entraînement (3), **caractérisée par** un dispositif de commande (8) fabriqué spécialement, qui met en œuvre le procédé selon une ou plusieurs des revendications précédentes.
